# EUROPEAN PATENT APPLICATION

(11) **EP 4 464 900 A1**
(43) Date of publication of application: **20.11.2024**
(21) Application number: 23740232.6
(22) Date of filing: 06.01.2023
(51) Int. Cl.: F15B 1/16, B23K 9/00

(54) **MANUFACTURING METHOD AND ACCUMULATOR EXTERIOR BODY**

(30) Priority: 13.01.2022 JP 2022004005
(71) Applicant: NHK Spring Co., Ltd., Yokohama-shi, Kanagawa 236-0004 (JP)
(72) Inventor: NAKANO, Naohito, Yokohama-shi, Kanagawa 236-0004 (JP); OHTA, Daijiro, Yokohama-shi, Kanagawa 236-0004 (JP); TSUJINO, Akira, Yokohama-shi, Kanagawa 236-0004 (JP); KUROKAWA, Tomoya, Yokohama-shi, Kanagawa 236-0004 (JP)
(74) Representative: Hoffmann Eitle
(86) International application number: PCT/JP2023/000222
(87) International publication number: WO 2023/136223

(57) **Abstract**

A manufacturing method according to the present invention is a manufacturing method for manufacturing an exterior body of an accumulator including a bottom, a shell, and a port, the method including press fitting the bottom into the shell and melting and solidifying a region including a part of a connection portion that has been press fitted. This manufacturing method makes it possible to obtain an exterior body of an accumulator capable of suppressing detachment of the connection portion at the time of conveyance and a decrease in fatigue strength of the exterior body after joining.

## Description

### Field

The present invention relates to a manufacturing method and an exterior body of an accumulator.

### Background

In an accumulator, a bellows has conventionally been used as a fluid separation membrane or a fluid sealing membrane having airtightness and stretchability. The bellows is provided in an internal space formed by an exterior body including a bottom, a shell, and a port. The bottom, the shell, and the port are joined by welding at their respective connection portions (see, for example, Patent Literature 1).

### Citation List

### Patent Literature

Patent Literature 1: JP 2005-155785 A

### Summary

### Technical Problem

The bottom, the shell, and the port are conveyed to a welding position in a state where the connecting members are connected to each other, and they are welded. At this time, there is a case where the connection portions are detached at the time of conveyance. Further, a generation of a gap in the connection portions after joining may lower the fatigue strength of the exterior body.

The present invention has been made in view of the above, and an object of the present invention is to provide a manufacturing method capable of suppressing detachment of the connection portions during conveyance and a decrease in fatigue strength of an exterior body after joining, and an exterior body of an accumulator.

### Solution to Problem

To solve the above-described problem and achieve the object, a manufacturing method according to the present invention manufactures an exterior body of an accumulator including a bottom, a shell, and a port, and includes: press fitting the bottom into the shell; and melting and solidifying a region including a part of a connection portion which has been press fitted.

Moreover, the above-described manufacturing method according to the present invention includes: press fitting the port into the shell; and melting and solidifying a region including a connection portion which has been press fitted.

Moreover, in the above-described manufacturing method according to the present invention, the bottom is press fitted into the shell after a bellows is disposed in the shell, a natural length of the bellows is longer than a length of the shell in a longitudinal axis direction, and the bellows is in a compressed state in a state where the bottom is press fitted into the shell.

Moreover, an exterior body of an accumulator according to the present invention is an accumulator including: an exterior body including a bottom, a shell, and a port; a bellows provided inside the exterior body; and a cap bellows assembly configured to seal one end of the bellows, wherein a welded portion formed by melting and solidifying a part of the bottom and the shell is formed at a connection portion between the bottom and the shell, and a connection surface of the bottom and a connection surface of the shell, which are continuous with the welded portion, are in a state of being in pressure contact with each other.

### Advantageous Effects of Invention

The present invention provides an effect of suppressing detachment of the connection portions at the time of conveyance and a decrease in fatigue strength of the exterior body after joining when the accumulator is manufactured.

### Brief Description of Drawings

FIG. 1 is a sectional view illustrating a configuration of an accumulator according to an embodiment of the present invention.
FIG. 2 is an exploded view illustrating a configuration of an exterior body of the accumulator illustrated in FIG. 1.
FIG. 3 is a sectional view illustrating a state in which each member constituting the exterior body illustrated in FIG. 2 is press fitted.
FIG. 4 is an enlarged view of the region R₁ illustrated in FIG. 3.
FIG. 5 is an enlarged view of the region R₂ illustrated in FIG. 3.
FIG. 6 is a view schematically illustrating a section of a welded portion when a distance between members is zero.
FIG. 7 is a view schematically illustrating a section of a welded portion when a distance between members is 0.2 mm.
FIG. 8 is a view schematically illustrating a section of a welded portion when a distance between members is 0.4 mm.
FIG. 9 is a view illustrating a relationship between an interval (gap) of connection portions and the number of times of durability.

### Description of Embodiments

Hereinafter, modes for carrying out the present invention (hereinafter, referred to as "embodiment") will be described with reference to the accompanying drawings. The drawings are schematic, and the relationship between the thickness and the width of each portion, the ratio of the thickness of each portion, and the like may be different from actual ones, and portions having different dimensional relationships and ratios may be included between the drawings.

### (Embodiment)

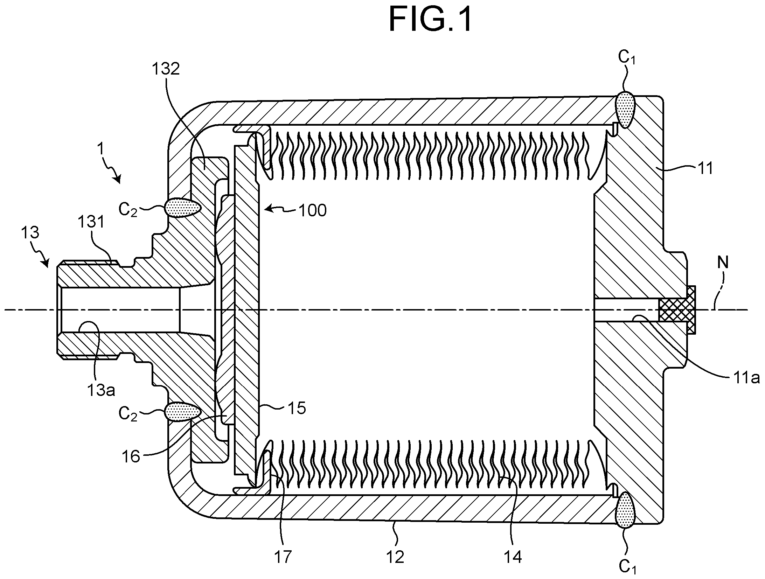

FIG. 1 is a sectional view illustrating a configuration of an accumulator according to an embodiment of the present invention. An accumulator 1 illustrated in FIG. 1 includes a bottom 11, a shell 12, a port 13, a bellows 14 housed in an internal space formed by the bottom 11, the shell 12, and the port 13, a cap body 15, a cap elastic portion 16, and a guide bellows 17. The bottom 11, the shell 12, and the port 13 constitute an exterior body of the accumulator 1. The cap body 15 and the cap elastic portion 16 constitute a cap bellows assembly 100.

Here, the bottom 11 and the port 13 are formed by using, for example, a cold-working material. The shell 12 is formed by using a hot-working material.

In the accumulator 1, the space formed by the bottom 11, the shell 12, and the port 13 is divided by the bellows 14. Specifically, different spaces are formed between the outside and the inside of the bellows 14. The internal space of the bellows 14 communicates with the outside via a hole 11a of the bottom 11. The space outside the bellows 14 communicates with the outside via a hole 13a of the port 13. FIG. 1 illustrates an example in which the central axes of the holes 11a and 13a coincide with the central axis N of the accumulator 1.

The bottom 11, the shell 12, and the port 13 are welded and fixed at respective connection portions. Specifically, a welded portion C₁ joining the bottom 11 and the shell 12 is formed at a connection portion between the bottom 11 and the shell 12. A welded portion C₂ joining the shell 12 and the port 13 is formed at a connection portion between the shell 12 and the port 13. The welded portion is formed of a part of two members to be connected, the part being melted, mixed, and then solidified.

In the accumulator 1, a liquid (hydraulic oil) or a gas (for example, nitrogen gas) is sealed in each of a space (bellows external space) formed by the exterior body and the bellows 14 and the internal space of the bellows 14. For example, a liquid is introduced into the bellows external space, and a gas is enclosed in the internal space.

The port 13 extends in a tubular shape and includes an introduction portion 131 which is an introduction port of a liquid into the shell 12, and a locking portion 132 which is connected to one end of the introduction portion 131 and is locked to an inner wall surface of the shell 12.

The bellows 14 has a tubular shape. A side surface portion of the bellows 14 has an accordion shape formed by repeating an uneven shape, and it extends and contracts with an external load. In the bellows 14, the gap between the shell 12 and the bellows 14 is maintained by a guide bellows 17 provided on the outer peripheral side, and the bellows can smoothly extend and contract. The length of the longitudinal axis of the bellows 14 in a state where a load other than gravity is not applied (natural state) is longer than the length of the shell 12 in a longitudinal axis direction. Here, the longitudinal axis of each member coincides with the central axis N in FIG. 1. The bellows 14 is formed by using, for example, stainless steel (SUS304). The guide bellows 17 is formed by using polybutylene terephthalate (PBT) or polyamide, for example. It is also possible to use a bellows having a length equal to or shorter than the length of the shell 12 in the longitudinal axis direction in the natural state.

The cap body 15 has a plate shape and covers an opening of the bellows 14 on a side opposite to the bottom 11 side, and an end portion of the bellows 14 is welded to seal the opening. The cap body 15 is constituted by using a material having durability to a pressure state (low pressure or high pressure) in the accumulator 1. The cap body 15 is formed by using, for example, metal, specifically, a steel plate hot commercial (SPHC). The cap body 15 preferably has heat resistance according to a use state.

The cap elastic portion 16 has a plate shape and is provided on the side of the cap body 15 opposite to the bellows 14 side. The cap elastic portion 16 is positioned between the port 13 and the cap body 15, and it seals the liquid (hydraulic oil) between the shell 12 and the bellows 14. The cap elastic portion 16 is formed by using, for example, acrylonitrile butadiene rubber (NBR).

In the accumulator 1, when the pressure of the line connected to the accumulator 1 changes through supplying/sucking the liquid via the hole 13a of the port 13, the hydraulic oil flows in from the hole 13a of the port 13, and the cap bellows assembly 100 is pushed up. The pressure in the space between the bellows 14 and the shell 12 is always the same as the pressure inside the bellows 14.

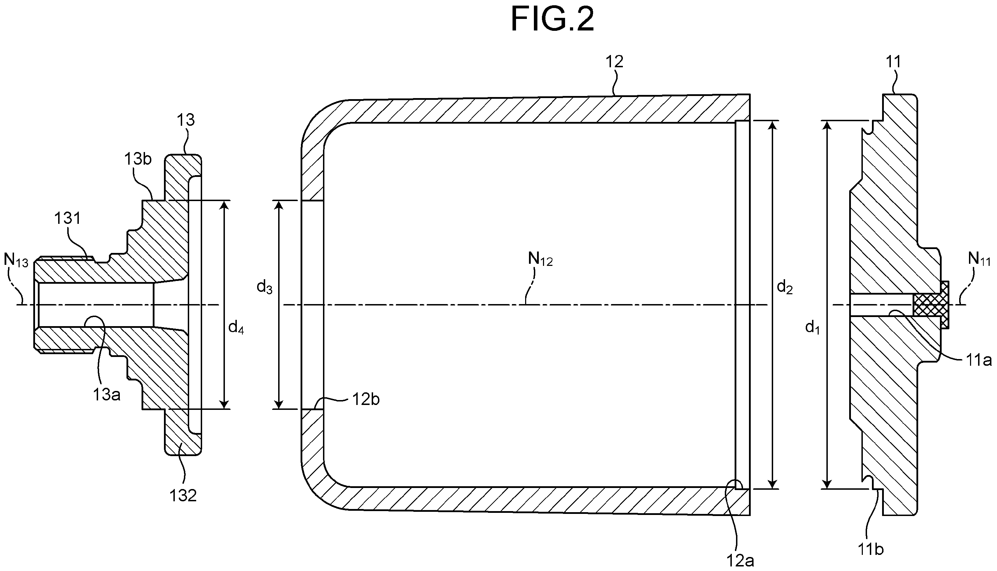

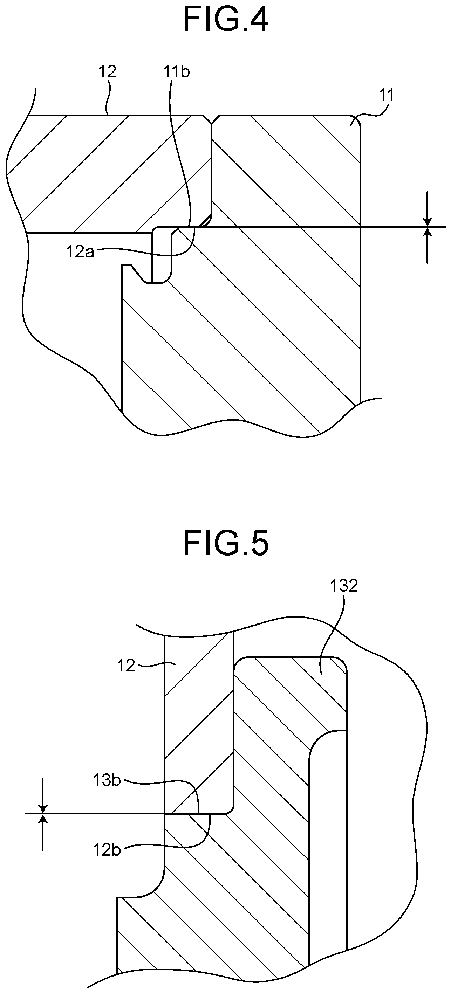

Next, a method for manufacturing the exterior body (the bottom 11, the shell 12, and the port 13) of the accumulator 1 will be described with reference to FIGS. 2 to 5. FIG. 2 is an exploded view illustrating a configuration of the exterior body of the accumulator illustrated in FIG. 1. Each of the bottom 11, the shell 12, and the port 13 has a connection surface connected to a connection target. Specifically, the bottom 11 has a connection surface 11b connected to the shell 12. The shell 12 has a connection surface 12a connected to the bottom 11 and a connection surface 12b connected to the port 13. The port 13 has a connection surface 13b connected to the shell 12. From the viewpoint of suppressing the generation of abrasion powder, it is preferable that the bottom 11 and the port 13 have chamfered ends on the insertion side (see, for example, FIG. 4). In the shell 12, it is also preferable that an insertion side end of the bottom 11 of the connection surface 12a is chamfered.

Here, each of the connection surfaces 11b and 13b corresponds to a columnar outer surface. Each of the connection surfaces 12a and 12b has a hole shape in which an opening forms a circle. The diameter (diameter d₁) of the circle formed by the connection surface 11b is larger than the diameter (diameter d₂) of the circle formed by the opening of the connection surface 12a. The diameter (diameter d₄) of the circle formed by the connection surface 13b is larger than the diameter (diameter d₃) of the circle formed by the opening of the connection surface 12b. The diameters d₁ and d₄ have values with which they can be press fitted into the diameters d₂ and d₃ (openings), respectively.

First, the connection surfaces of the bottom 11, the shell 12, and the port 13 are connected. At this time, the bottom 11 and the port 13 are press fitted into the shell 12 (press-fitting step). At this time, the port 13 is inserted from the opening on the connection surface 12a side of the shell 12, and the connection surfaces 12b and 13b are brought into close contact with each other. Thereafter, the contents such as the bellows 14 are disposed, and then the connection surface 11b of the bottom 11 is brought into close contact with the connection surface 12a. At this time, the bellows 14 is compressed in the exterior body.

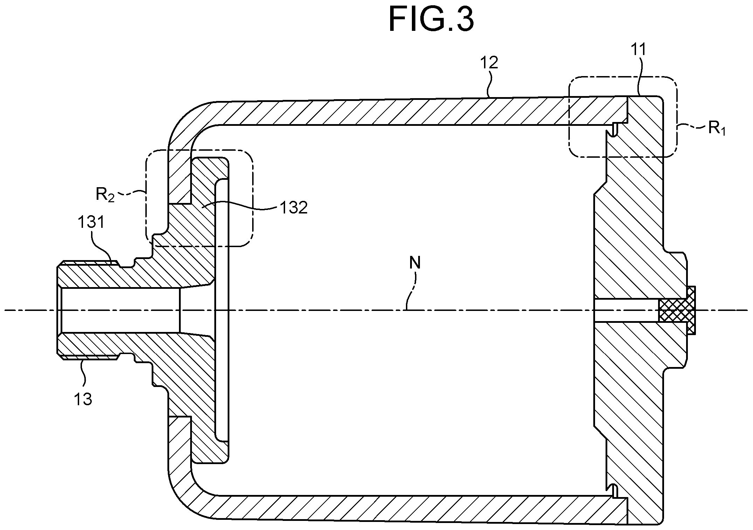

FIG. 3 is a sectional view illustrating a state in which each member constituting the exterior body illustrated in FIG. 2 is press fitted. FIG. 4 is an enlarged view of the region R₁ illustrated in FIG. 3. FIG. 5 is an enlarged view of the region R₂ illustrated in FIG. 3. In a state where the bottom 11 and the port 13 are press fitted into the shell 12, the connection surfaces are in pressure contact with each other at each connection portion without a gap. For example, the connection surface 11b of the bottom 11 and the connection surface 12a of the shell 12 are in close contact with each other without a gap. The connection surface 12b of the shell 12 and the connection surface 13b of the port 13 are in close contact with each other without a gap. Thus, the members can be stably conveyed to the welding position without detachment of the connection portion of the members even though the members are conveyed in the assembled state.

At this time, the central axis N₁₁ (see FIG. 2) of the hole 11a of the bottom 11, the central axis N₁₂ of the shell 12, and the central axis N₁₃ of the hole 13a of the port 13 coincide with the axis N. The central axes may be shifted with respect to the axis N depending on the formation position of the holes.

Thereafter, the members are joined to each other by welding the connection portions from the outside of the assembled exterior body (joining step). For example, the welded portion C₁ formed of a region including a part of the connection portion between the bottom 11 and the shell 12, the region being melted and solidified, is formed in the bottom 11 and the shell 12 (see FIG. 1). The welded portion C₂ formed of a region including a connection portion between the shell 12 and the port 13, the region being melted and solidified, is formed in the shell 12 and the port 13. At this time, because the regions melt at the time of welding, contamination after welding is suppressed even though abrasion powder or the like is generated at the time of press fitting. The connection surfaces of the respective members positioned outside the welded portions are in a state of being in pressure contact with each other, and a gap between them is zero.

As the welding process, for example, electron beam welding, tungsten inert gas (TIG) welding, CO₂ welding, and laser welding are used, and in particular, electron beam welding is suitable.

In the manufacturing of the accumulator, for example, the port 13 is press fitted into the shell 12 and welded. Thereafter, the bottom 11 and the bellows 14, and the cap bellows assembly 100 and the bellows 14 are welded, and the bottom 11 is press fitted into the shell 12 and welded.

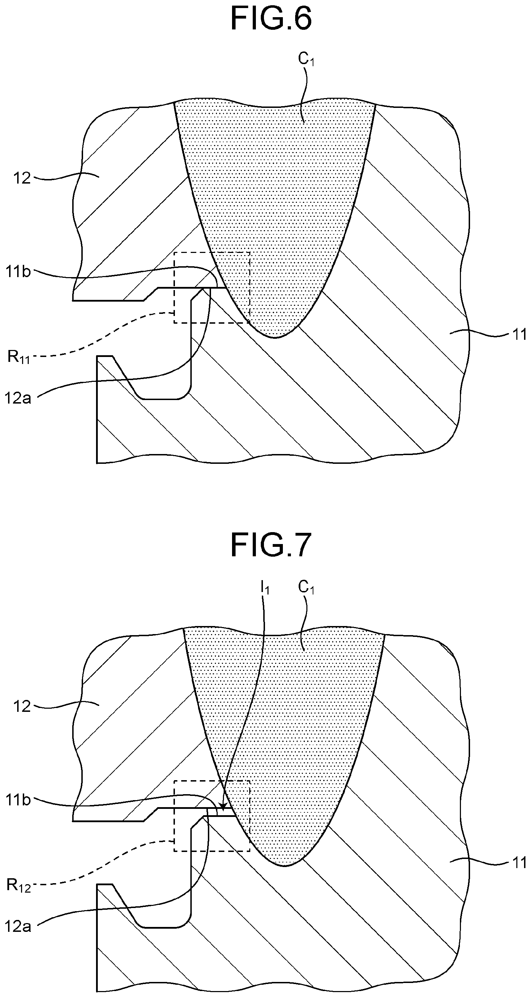

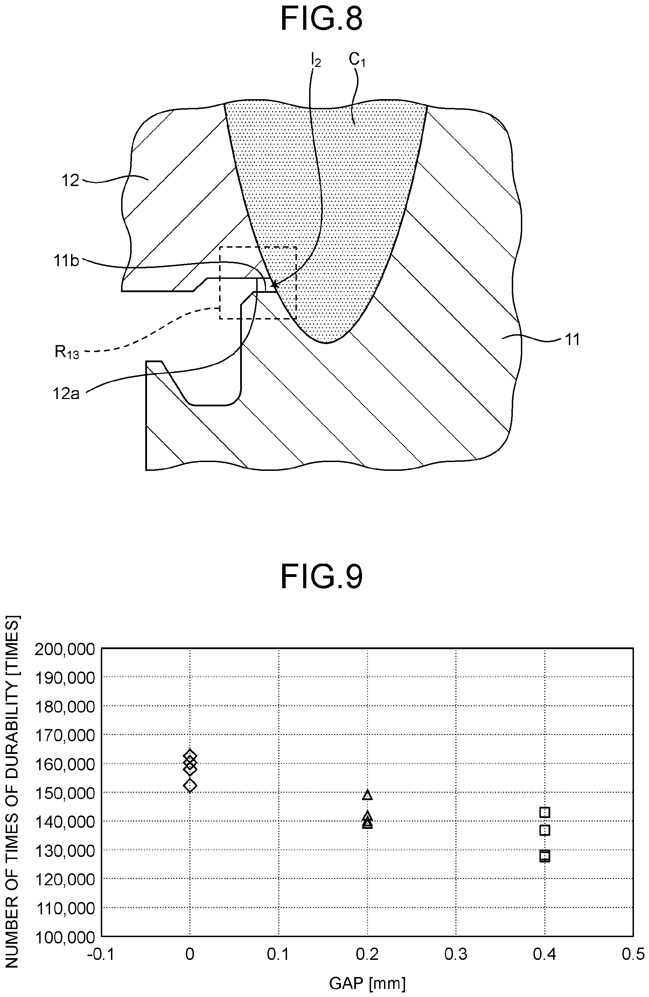

Here, a welding mode based on the interval between the connection portions will be described with reference to FIGS. 6 to 8. FIG. 6 is a view schematically illustrating a section of a welded portion when a distance between members is zero. FIG. 7 is a view schematically illustrating a section of a welded portion when a distance between members is 0.2 mm. FIG. 8 is a view schematically illustrating a section of a welded portion when a distance between members is 0.4 mm. FIGS. 6 to 8 illustrate a gap between the connection surface 11b of the bottom 11 and the connection surface 12a of the shell 12.

As illustrated in FIGS. 6 to 8, when the connection portion is not in pressure contact or a gap is generated, the interval between the connection portions is maintained even after the formation of the welded portion C₁. Further, as illustrated in FIGS. 7 and 8, it can be seen that when there is a gap, an intermittent portion (intermittent portions I₁ and I₂) corresponding to the gap is also formed at the welded portion C₁.

Next, the relationship between the distance between the connection portions and the number of times of durability in a durability test of the exterior body will be described with reference to FIG. 9. FIG. 9 is a view illustrating a relationship between an interval (gap) of connection portions and the number of times of durability. In the durability test, the hydraulic pressure was varied within a range of 0.9 to 23.1 MPa with respect to the exterior body, the pressure variation due to the hydraulic pressure was repeated until the exterior body was broken, and the number of repetitions immediately before breaking was defined as the number of times of durability. In FIG. 9, the number of times of durability of a sample in which the gap between the connection surface 11b of the bottom 11 and the connection surface 12a of the shell 12 is 0 is plotted by O, the number of times of durability of the sample in which the gap is 0.2 mm is plotted by △, and the number of times of durability of the sample in which the gap is 0.4 mm is plotted by □. The materials used and welding conditions are the same. As can be seen from FIG. 9, the smaller the gap, the larger the number of times of durability. It is considered that by press fitting the members to reduce the gap, the stress expansion coefficient of the fatigue-weakest portion decreases, and the durability improves.

Also, at the connection portion between the shell 12 and the port 13, in the same manner as at the connection portion between the bottom 11 and the shell 12, when a gap is formed at the connection portion at the time of press fitting, the fatigue strength at the joint portion between the shell 12 and the port 13 after welding may decrease. On the other hand, when no gap is formed because of press fitting as in the present embodiment, it is possible to suppress a decrease in fatigue strength at the joint portion between the shell 12 and the port 13.

According to the present embodiment, at the time of manufacturing the exterior body, the members constituting the exterior body are connected to each other through press fitting and then fixed through welding. Thus, at the time of manufacturing the accumulator, it is possible to suppress detachment of the connection portions at the time of conveyance and a decrease in fatigue strength of the exterior body.

In addition, according to the present embodiment, since a state in which there is no gap at the connection portion is maintained even after the members constituting the exterior body are welded to each other, high durability against repeated use can be obtained.

In addition, according to the present embodiment, even when the bellows 14 is compressed and stored in the exterior body when the connection surfaces of the bottom 11, the shell 12, and the port 13 are connected (press fitted), since the connection portions are press fitted, the bottom 11 is not detached by the reaction force of the bellows, and conveyance or welding processing can be performed safely.

Although an embodiment for carrying out the present invention have been described so far, the present invention should not be limited only by the above-described embodiment. Here, in the port 13, since the locking portion 132 is locked to the shell 12 and the contents such as the bellows 14 are disposed at the time of assembling before welding, the port 13 is hardly detached from the shell 12. In this configuration, it is not essential to connect the port 13 to the shell 12 through press fitting. However, from the viewpoint of securing the joining strength, it is preferable to press fit the port 13 into the shell 12 for welding.

As described here, the present invention can include various embodiments and the like not described herein, and various design changes and the like can be made without departing from the technical idea specified by the claims.

### Industrial Applicability

As described above, the manufacturing method and the exterior body of the accumulator according to the present invention are suitable for suppressing detachment of the connection portion at the time of conveyance and a decrease in fatigue strength of the exterior body after joining.

### Reference Signs List

1 ACCUMULATOR
11 BOTTOM
11a, 13a HOLE
11b, 12a, 12b, 13b CONNECTION SURFACE
12 SHELL
13 PORT
14 BELLOWS
15 CAP BODY
16 CAP ELASTIC PORTION
17 GUIDE BELLOWS
100 CAP BELLOWS ASSEMBLY
131 INTRODUCTION PORTION
132 LOCKING PORTION
C₁, C₂ WELDED PORTION

## Claims

1. A manufacturing method for manufacturing an exterior body of an accumulator including a bottom, a shell, and a port, the method comprising:
press fitting the bottom into the shell; and
melting and solidifying a region including a part of a connection portion which has been press fitted.

2. The manufacturing method according to claim 1, comprising:
press fitting the port into the shell; and
melting and solidifying a region including a connection portion which has been press fitted.

3. The manufacturing method according to claim 1 or 2, wherein
the bottom is press fitted into the shell after a bellows is disposed in the shell,
a natural length of the bellows is longer than a length of the shell in a longitudinal axis direction, and
the bellows is in a compressed state in a state where the bottom is press fitted into the shell.

4. An exterior body of an accumulator, the accumulator comprising:
an exterior body including a bottom, a shell, and a port;
a bellows provided inside the exterior body; and
a cap bellows assembly configured to seal one end of the bellows, wherein
a welded portion formed by melting and solidifying a part of the bottom and the shell is formed at a connection portion between the bottom and the shell, and
a connection surface of the bottom and a connection surface of the shell, which are continuous with the welded portion, are in a state of being in pressure contact with each other.
